(19) Europäisches Patentamt / European Patent Office / Office européen des brevets

(11) **EP 3 608 835 B1**

(12) **FASCICULE DE BREVET EUROPEEN**

(45) Date de publication et mention de la délivrance du brevet:
**12.07.2023 Bulletin 2023/28**

(21) Numéro de dépôt: **19189722.2**

(22) Date de dépôt: **02.08.2019**

(51) Classification Internationale des Brevets (IPC):
**G06T 7/11** *(2017.01)* **G06T 7/155** *(2017.01)*
**G06T 7/194** *(2017.01)* **G06V 10/26** *(2022.01)*
**G06V 10/52** *(2022.01)* **G06V 40/12** *(2022.01)*
**G06T 7/187** *(2017.01)*

(52) Classification Coopérative des Brevets (CPC):
**G06T 7/187; G06T 7/11; G06T 7/155; G06T 7/194;**
**G06V 10/267; G06V 10/52; G06V 40/1347;**
G06T 2207/20016; G06T 2207/30196

(54) **PROCEDE DE TRAITEMENT D'IMAGES D'EMPREINTES**

VERFAHREN ZUR VERARBEITUNG VON BILDERN VON FINGERABDRÜCKEN

METHOD FOR PROCESSING IMAGES OF FINGERPRINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.08.2018 FR 1857447**

(43) Date de publication de la demande:
**12.02.2020 Bulletin 2020/07**

(73) Titulaire: **Idemia Identity & Security France**
**92400 Courbevoie (FR)**

(72) Inventeur: **KAZDAGHLI, Laurent**
**92400 COURBEVOIE (FR)**

(74) Mandataire: **Idemia**
**2, place Samuel de Champlain**
**92400 Courbevoie (FR)**

(56) Documents cités:
**EP-A1- 3 214 601      EP-B1- 3 214 601**

• **YONGCHAO XU ET AL: "Two Applications of Shape-Based Morphology: Blood Vessels Segmentation and a Generalization of Constrained Connectivity", 27 mai 2013 (2013-05-27), MATHEMATICAL MORPHOLOGY AND ITS APPLICATIONS TO SIGNAL AND IMAGE PROCESSING, SPRINGER BERLIN HEIDELBERG, BERLIN, HEIDELBERG, PAGE(S) 390 - 401, XP047028578, ISBN: 978-3-642-38293-2 * Section 2 * * Section 3 ***
• **CHANG Y-L ET AL: "ADAPTIVE IMAGE REGION-GROWING", IEEE TRANSACTIONS ON IMAGE PROCESSING, IEEE SERVICE CENTER, PISCATAWAY, NJ, US, vol. 3, no. 6, 1 novembre 1994 (1994-11-01), pages 868-872, XP000478144, ISSN: 1057-7149, DOI: 10.1109/83.336259**

## Description

L'invention concerne un procédé de traitement d'une image représentative d'une pluralité de doigts fournie par un capteur d'images de type transistor en couches minces d'un système de capture d'empreintes digitales et un dispositif mettant en oeuvre le procédé.

## Contexte de l'invention

L'utilisation d'empreintes digitales, par exemple du type empreinte d'un doigt, d'une pluralité de doigts, d'une paume de main, permet de sécuriser des accès à des bâtiments ou à des machines. Utiliser cette technologie permet de renforcer la sécurité dans la mesure où la probabilité que deux personnes aient deux empreintes digitales identiques est quasiment nulle.

Un système de capture d'une empreinte digitale permet de capturer une image d'une empreinte digitale. Dans le cas d'une identification, cette empreinte est comparée avec un ensemble d'empreintes digitales de référence contenues dans une base de données. Dans le cas d'une authentification, cette empreinte est comparée à une seule empreinte digitale. La comparaison permet de déterminer si l'empreinte digitale capturée appartient ou non à une personne référencée dans la base de données ou si la personne est bien celle qu'elle prétend être.

Un bon nombre de systèmes de capture d'empreintes digitales utilisent des capteurs d'images de type CCD (dispositif à transfert de charge, « charge-coupled device » en terminologie anglo-saxonne) ou CMOS (semiconducteur metal-oxyde complémentaires, « complementary metal-oxide-semiconductor » en terminologie anglo-saxonne). Les capteurs CCD et CMOS fournissent des images ayant des propriétés particulières (distributions des niveaux de gris ou des valeurs de composantes de couleurs, résolution, absences d'artéfacts, ...) que des algorithmes de traitement d'images, de reconnaissance ou de compression prennent en compte lors de leurs traitements. Ces traitements seraient en grande partie inadaptés s'ils devaient traiter des images présentant des propriétés différentes. Par exemple, ces algorithmes seraient incapables de traiter des images fournies par des capteurs utilisant une technologie différentes tels que les capteurs de type TCM (transistors en couches minces, « thin-film transistors (TFT) » en terminologie anglosaxonne), dits capteurs TCM. Par exemple, lorsqu'un doigt est posé sur un système de capture d'empreintes digitales utilisant un capteur TCM, dit système TCM, le doigt apparaît dans l'image fournie par ce capteur avec des niveaux de gris inversés par rapport à une image fournie par un système de capture d'empreintes digitales utilisant un capteur CCD ou CMOS, dit système CCD/CMOS. Par ailleurs, dans les images de doigt fournies par un système TCM, des ombres portées apparaissent au voisinage du doigt, ce qui n'est pas le cas avec un système CCD/CMOS. La demande de brevet EP 3 214 601 décrit un procédé d'amélioration d'images d'empreintes digitales. Le procédé d'amélioration décrit comprend une étape de segmentation de l'image générant une image modifiée ne contenant que des régions de l'image présentant une alternance de zones claires et de zones sombres à une fréquence supérieure à une fréquence minimale.

Il est souhaitable de pallier ces inconvénients de l'état de la technique. Il est notamment souhaitable de proposer un procédé et un dispositif qui permettent d'utiliser des capteurs TCM avec des algorithmes destinés à recevoir des images provenant de capteurs CCD ou CMOS. Par ailleurs, ce procédé doit être simple à mettre en oeuvre.

## EXPOSE DE L'INVENTION

Selon un premier aspect de l'invention, l'invention concerne un procédé de traitement d'une image représentative d'au moins un doigt fournie par un capteur d'images de type transistor en couches minces d'un système de capture d'empreintes digitales, pour une identification ou une authentification de l'empreinte, ledit système comprenant une lame transparente comprenant une face sur laquelle est posé chaque doigt et ledit capteur d'images est positionné de sorte à générer une image de chaque doigt. Le procédé comprend :

obtenir une image de chaque doigt fournie par le capteur d'images, dite première image ; obtenir une deuxième image en supprimant chaque composante continue de la première image en appliquant un filtre passe-haut; obtenir une troisième image en appliquant un filtre moyenneur à la deuxième image ;

appliquer une analyse en composantes connexes à la troisième image afin de définir des régions dans ladite troisième image, chaque région comprenant des pixels ayant une valeur identique, dite valeur représentative ; organiser les régions sous forme d'arbre hiérarchique dans lequel les régions sont organisées selon une relation parents-enfants, une première région étant parent d'une deuxième région, qui est alors enfant de la première région, lorsqu'au moins un pixel de la deuxième région est voisin d'un pixel de la première région et qu'un écart entre les valeurs représentatives des première et deuxième régions est plus faible qu'un écart entre les valeurs représentatives de la première région et de toutes autres régions ayant au moins un pixel voisin d'un pixel de la première région, la région enfant ayant une valeur représentative plus faible que sa région parent; parcourir l'arbre hiérarchique par ordre de valeurs représentatives croissantes et agglomérer chaque région enfant avec sa région parent lorsqu'un coefficient d'accroissement C est inférieur à un premier seuil prédéterminé, le coefficient d'accroissement étant calculé de la manière suivante :

$$C = a \times S + b \times \Delta S$$

où *a* et *b* sont des constantes prédéterminées, S est une aire de la région enfant et $\Delta S$ est un pourcentage d'augmentation de l'aire de la région agglomérée par rapport à l'aire de la région enfant ;
déterminer une enveloppe convexe pour chaque région agglomérée obtenue ;
générer une quatrième image en conservant les pixels situés dans chaque enveloppe convexe dans la deuxième image.

L'image obtenue en appliquant le procédé de l'invention à une image issue d'un capteur de type transistor en couches minces possède alors des propriétés conformes aux propriétés d'images fournies par un capteur CCD ou CMOS. Les caractéristiques des images obtenues par ce procédé sont alors conformes à des caractéristiques d'images attendues par des procédés de traitement d'images adaptés à des images issues de capteurs CCD ou CMOS. Par ailleurs, l'organisation suivant un arbre hiérarchique et le parcours de cet arbre hiérarchique lors de la formation des régions, permet de déterminer plusieurs régions en parallèle et ainsi de traiter des images représentant une pluralité de doigts.

Selon un mode de réalisation, le procédé comprend appliquer un traitement aux valeurs des pixels de la quatrième image compris dans chaque enveloppe convexe afin que ces pixels aient des valeurs se situant dans une gamme de valeurs prédéterminées.

Selon un mode de réalisation, le procédé comprend, fixer la valeur de chaque pixel de la quatrième image situé à l'extérieur d'une enveloppe convexe à une valeur prédéfinie et modifier une valeur initiale de chaque pixel de la quatrième image situé à l'intérieur d'une enveloppe convexe en une valeur finale en fonction d'une distance entre ledit pixel et ladite enveloppe convexe, de sorte que ladite valeur finale se rapproche de la valeur prédéfinie lorsque ladite distance diminue et se rapproche de la valeur initiale lorsque ladite distance augmente.

Selon un deuxième aspect de l'invention, l'invention concerne un dispositif de traitement d'une image représentative d'au moins un doigt fournie par un capteur d'images de type transistor en couches minces d'un système de capture d'empreintes digitales, pour une identification ou une authentification de l'empreinte, ledit système comprenant une lame transparente comprenant une face sur laquelle est posée chaque doigt et ledit capteur d'images est positionné de sorte à générer une image de chaque doigt. Le dispositif comprend :

des moyens d'obtention pour obtenir une image de chaque doigt fournie par le capteur d'images, dite première image ;
des moyens de filtrage passe-haut pour obtenir une deuxième image en supprimant chaque composante continue de la première image ;
des moyens de filtrage pour obtenir une troisième image en appliquant un filtre moyenneur à la deuxième image ;
des moyens de traitement pour appliquer une analyse en composantes connexes à la troisième image afin de définir des régions dans ladite troisième image, chaque région comprenant des pixels ayant une valeur identique, dite valeur représentative ;
des moyens de traitement pour organiser les régions sous forme d'arbre hiérarchique dans lequel les régions sont organisées selon une relation parents-enfants, une première région étant parent d'une deuxième région, qui est alors enfant de la première région, lorsqu'au moins un pixel de la deuxième région est voisin d'un pixel de la première région et qu'un écart entre les valeurs représentatives des première et deuxième régions est plus faible qu'un écart entre les valeurs représentatives de la première région et de toutes autres régions ayant au moins un pixel voisin d'un pixel de la première région, la région enfant ayant une valeur représentative plus faible que sa région parent;
des moyens de traitement pour parcourir l'arbre hiérarchique par ordre de valeurs représentatives croissantes et agglomérer chaque région enfant avec sa région parent lorsqu'un coefficient d'accroissement C est inférieur à un premier seuil prédéterminé, le coefficient d'accroissement étant calculé de la manière suivante :

$$C = a \times S + b \times \Delta S$$

où *a* et *b* sont des constantes prédéterminées, S est une aire de la région enfant et $\Delta S$ est un pourcentage d'augmentation de l'aire de la région agglomérée par rapport à l'aire de la région enfant ;
des moyens de traitement pour déterminer une enveloppe convexe pour chaque région agglomérée obtenue;
des moyens de traitement pour générer une quatrième image en conservant les pixels situés dans chaque enveloppe convexe dans la deuxième image.

Selon un troisième aspect de l'invention, l'invention concerne un programme d'ordinateur comprenant des instructions pour mettre en oeuvre, par un dispositif, le procédé selon le premier aspect, lorsque ledit programme est exécuté par un processeur dudit dispositif.

Selon un quatrième aspect de l'invention, l'invention concerne des moyens de stockage, stockant un programme d'ordinateur comprenant des instructions pour mettre en oeuvre, par un dispositif, le procédé selon le premier aspect, lorsque ledit programme est exécuté par un processeur dudit dispositif.

## BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 décrit schématiquement un exemple de système de capture d'empreintes digitales utilisant le procédé selon l'invention ;
- la Fig. 2 illustre schématiquement de manière détaillée le système de capture d'empreintes digitales ;
- la Fig. 3 illustre schématiquement un exemple d'architecture matérielle d'un module de traitement mettant en oeuvre le procédé selon l'invention ;
- la Fig. 4 illustre schématiquement un exemple de procédé de traitement d'une image représentative d'au moins un doigt fournie par un capteur d'images de type transistor en couches minces;
- la Fig. 5A représente une image d'une pluralité de doigts fournie par un capteur d'images de type transistor en couches minces ;

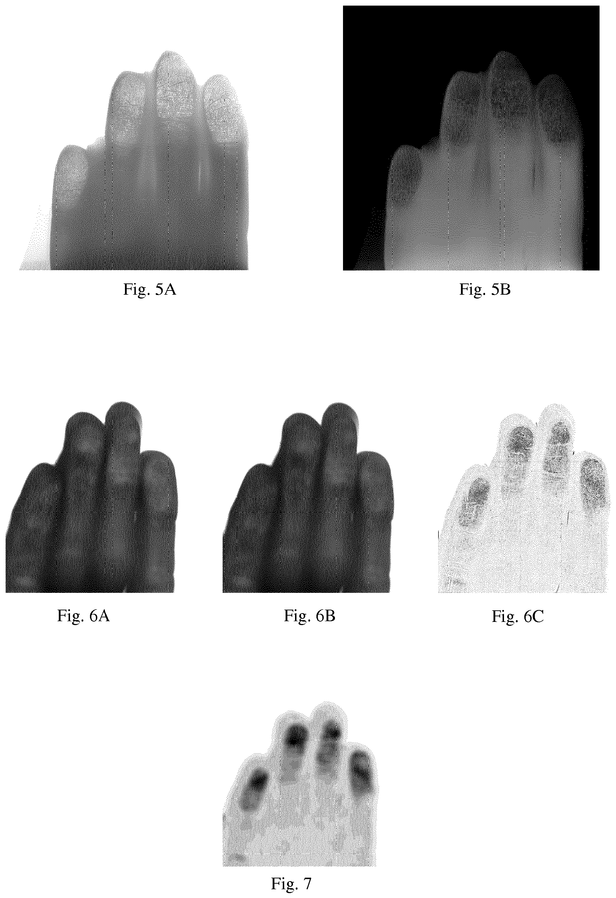

- la Fig. 5A représente l'image d'une pluralité de doigts fournie par le capteur d'images de type transistor en couches minces après inversion des niveaux de gris ;
- la Fig. 6A représente une image d'une pluralité de doigts fournie par un capteur d'images de type transistor en couches minces utilisée en entrée d'un filtre top-hat ;
- la Fig. 6B représente l'image d'une pluralité de doigts fournie par le capteur d'images de type transistor en couches minces ayant subi une fermeture morphologique ;
- la Fig. 6C représente une image résultant d'un filtre top-hat ;
- la Fig. 7 représente l'image résultant du filtre top-hat après application d'un filtre moyenneur ;

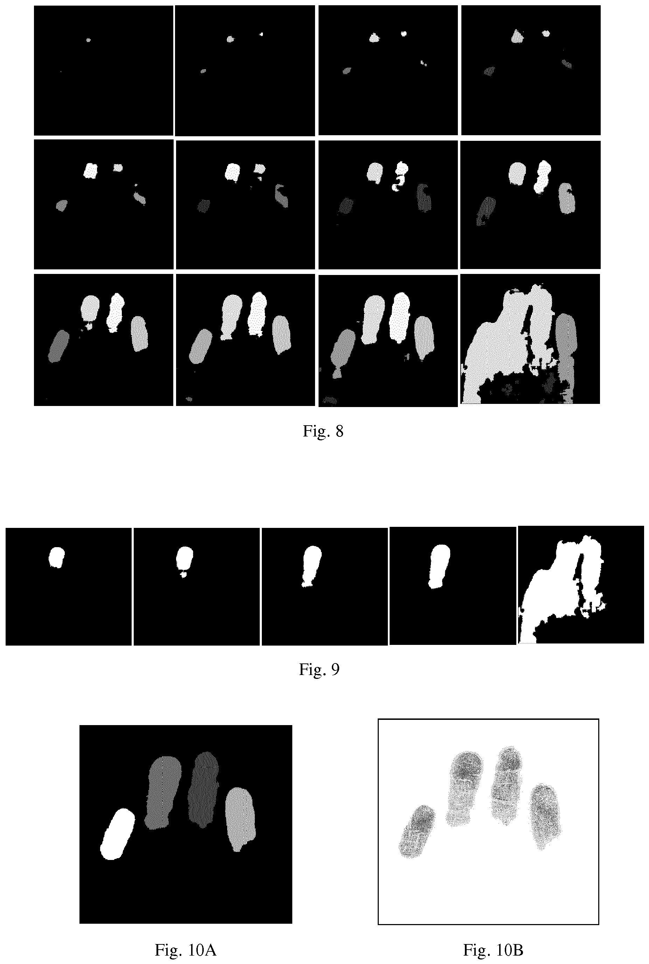

- La Fig. 8 représente une succession d'images illustrant un procédé de formation de régions dans l'image résultant du filtre moyenneur en utilisant un arbre hiérarchique;
- la Fig. 9 représente une succession d'images représentant une évolution d'une région;
- la Fig. 10A représente un résultat du procédé de formation de régions;
- la Fig. 10B représente des zones de l'image résultant du filtre top-hat correspondant à des régions détectées par le procédé de formation de régions;

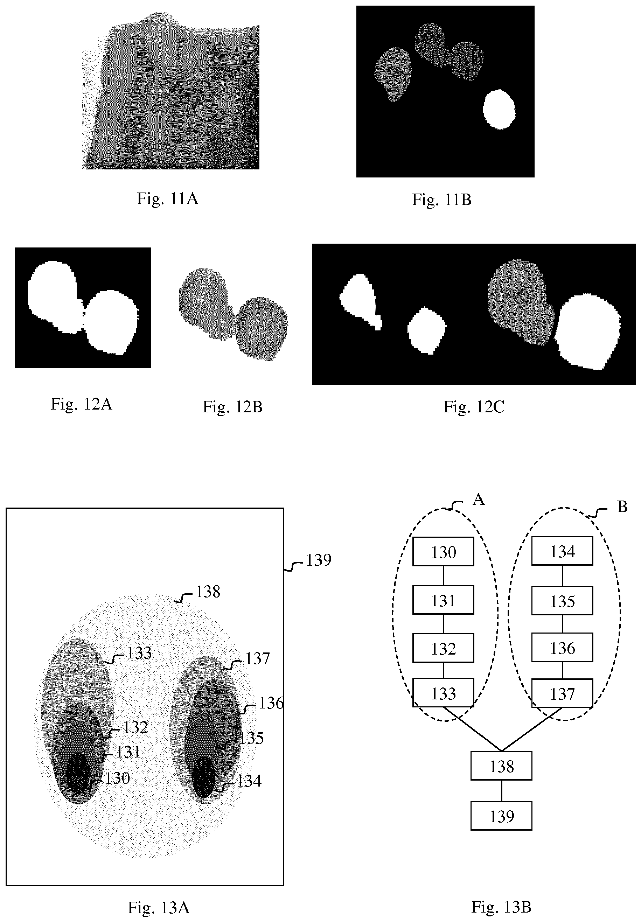

- la Fig. 11A représente une image d'une pluralité de doigts fournie par un capteur d'images de type transistor en couches minces dans laquelle les doigts sont collés ;
- la Fig. 11B représente des régions détectées dans l'image d'une pluralité de doigts dans laquelle les doigts sont collés ;
- la Fig. 12A représente une région détectée dans l'image d'une pluralité de doigts dans laquelle les doigts sont collés et la Fig. 12B représente une empreinte correspondant à la région détectée ;
- la Fig. 12C représente à gauche une région détectée dans l'image d'une pluralité de doigts dans laquelle les doigts sont collés après érosion morphologique ; et, à droite, un résultat d'une dilatation morphologique des régions obtenues par érosion morphologique.

## DESCRIPTION DETAILLEE DE DIVERS MODES DE REALISATION

Le procédé de l'invention est décrit dans un contexte où un système de capture d'empreintes digitales utilisant un capteur de type transistor en couches minces fait des acquisitions d'images d'une pluralité de doigts. L'invention est toutefois adaptée pour fonctionner sur des images ne comportant qu'un doigt. Il permet alors d'obtenir des images d'un doigt présentant des propriétés identiques aux propriétés d'images acquises par un système de capture d'empreintes digitales utilisant un capteur CCD ou CMOS.

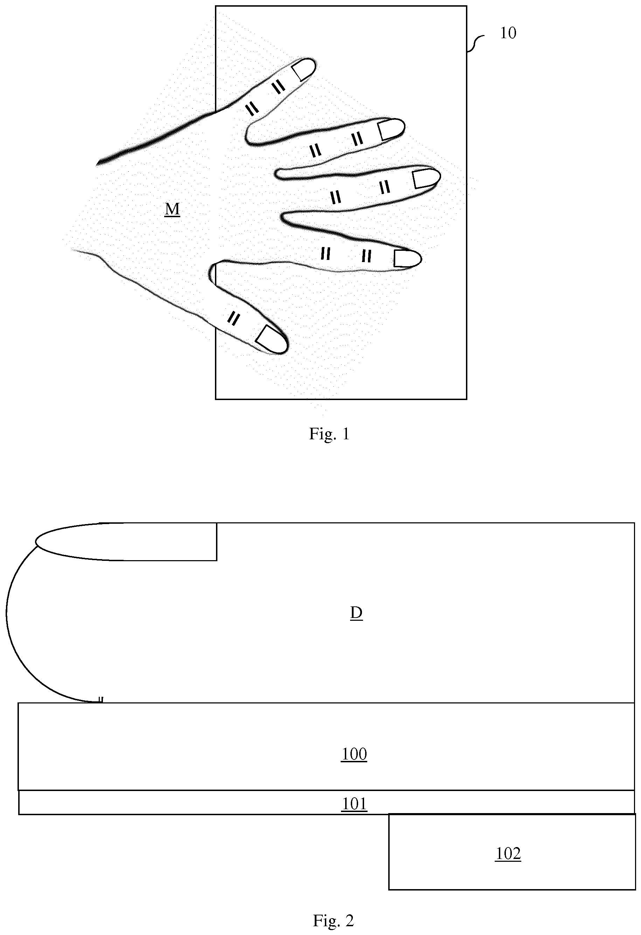

La **Fig. 1** décrit schématiquement un exemple de système de capture d'empreintes digitales utilisant le procédé selon l'invention.

Dans la Fig. 1, une pluralité de doigts d'une main M est posée sur un système de capture d'empreintes 10.

La **Fig. 2** illustre schématiquement de manière détaillée le système de capture d'empreintes digitales 10.

Le système de capture d'empreintes digitales 10 comprend une lame transparente 100 comprenant une face supérieure sur laquelle est posée la pluralité de doigts, dont seul un doigt D est représenté dans la Fig. 2. Situé en dessous de la lame transparente 100 et collé à la face inférieure de ladite lame, le système de capture d'empreintes digitales comprend un capteur d'images de type transistor en couches minces, dit capteur TCM 101. Le capteur TCM 101 est positionné de sorte à générer une image de la pluralité de doigts. Le système de capture d'empreintes digitales 10 comprend de plus un module de traitement 102.

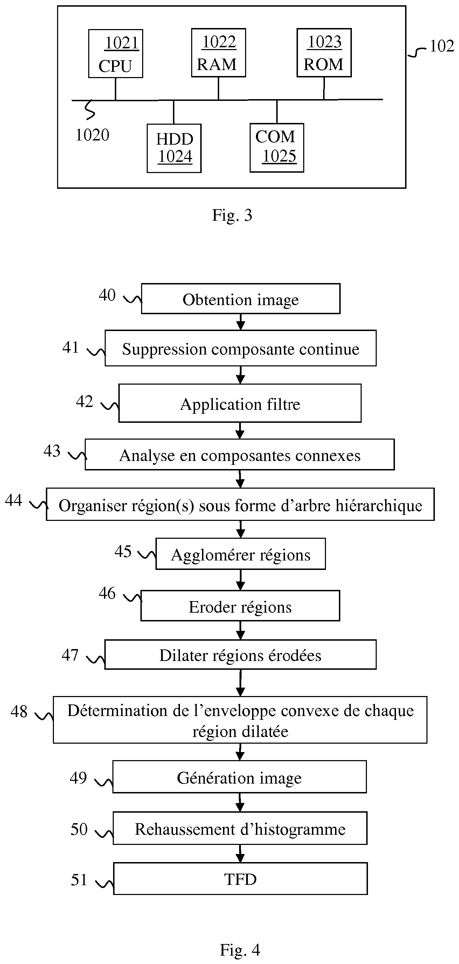

La **Fig. 3** illustre schématiquement un exemple d'architecture matérielle du module de traitement 102.

Selon l'exemple d'architecture matérielle représenté à la Fig. 3, le module de traitement 102 comprend alors, reliés par un bus de communication 1020 : un processeur ou CPU (« Central Processing Unit » en anglais) 1021 ; une mémoire vive RAM (« Random Access Memory » en anglais) 1022 ; une mémoire morte ROM (« Read Only Memory » en anglais) 1023 ; une unité de stockage telle qu'un disque dur ou un lecteur de support de stockage, tel qu'un lecteur de cartes SD (« Secure Digital » en anglais) 1024 ; au moins une interface de communication 1025 permettant au module de traitement 102 de recevoir les images acquises par le capteur d'images 101.

Le processeur 1021 est capable d'exécuter des instructions chargées dans la RAM 1022 à partir de la ROM 1023, d'une mémoire externe (non représentée), d'un support de stockage (tel qu'une carte SD), ou d'un réseau de communication. Lorsque le module de traitement 102 est mis sous tension, le processeur 1021 est capable de lire de la RAM 1022 des instructions et de les exécuter. Ces instructions forment un programme d'ordinateur causant la mise en oeuvre, par le processeur 1021, du procédé décrit en relation avec la Fig. 4.

Le procédé décrit en relation avec la Fig. 4 peut être implémenté sous forme logicielle par exécution d'un ensemble d'instructions par une machine programmable, par exemple un DSP (« Digital Signal Processor » en anglais), un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 4** illustre schématiquement un exemple de procédé de traitement d'une image représentative d'au moins un doigt fournie par un capteur d'images de type transistor en couches minces.

Dans une étape 40, le module de traitement 102 obtient une première image du capteur TCM 101. Un exemple d'une image d'une pluralité de doigts fournie par le capteur TCM 101 est représenté par la **Fig. 5A.** Les parties de la pluralité de doigts en contact avec la face supérieure de la lame transparente 100 apparaissent en gris foncé. Les vallées des empreintes digitales de la pluralité de doigts apparaissent en gris clair, voire en blanc. Des ombres portées apparaissent au voisinage des doigts. La **Fig. 5B** représente l'image de la Fig. 5A après inversion des niveaux de gris. On se rend compte qu'une simple inversion des niveaux de gris ne permet pas d'obtenir une image exploitable. En effet, les ombres portées sont toujours présentes et n'ont fait que changer de niveau de gris. La présence des ombres portées empêche d'identifier correctement chaque doigt et peut créer de fausses minuties d'empreintes digitales.

Dans une étape 41, le module de traitement 102 supprime chaque composante continue de la première image afin d'obtenir une deuxième image. Une composante continue dans une image apparaît sous forme d'une zone uniforme. Dans un mode de réalisation, le module de traitement 102 applique un filtre passe haut à la première image pour obtenir la deuxième image. Dans un mode de réalisation, la deuxième image est obtenue par le module de traitement 102 en appliquant un filtre top-hat tel que décrit dans le document « P.T. Jackway, improved morphological top-hat », Electronics Letters, Vol: 36, Issue: 14, 6 July 2000 )» à la première image pour supprimer chaque composante continue. Appliquer un filtre top-hat à une image initiale consiste à appliquer une fermeture morphologique à ladite image initiale puis à calculer une différence entre l'image initiale et l'image résultant de la fermeture morphologique. La **Fig. 6A** représente une image d'une pluralité de doigts fournie par un capteur TCM, dite image originale, utilisée en entrée d'un filtre top-hat. La **Fig. 6B** représente un résultat d'application d'une fermeture morphologique à l'image originale. La **Fig. 6C** représente un résultat d'application d'un filtre top-hat à l'image originale. Dans la deuxième image, les pixels correspondant aux crêtes des empreintes digitales apparaissent en gris foncé alors que les pixels correspondant aux vallées apparaissent en gris clair, ce qui correspond à des caractéristiques souhaitées des images. Cependant, ces pixels intéressants sont noyés parmi des pixels offrant peu d'intérêt, voire aucun intérêt pour une reconnaissance d'empreintes. La suite du procédé permet d'éliminer des pixels sans intérêt pour la reconnaissance d'empreintes.

Dans une étape 42, le module de traitement 102 obtient une troisième image en appliquant un filtre moyenneur à la deuxième image. Un filtre moyenneur remplace chaque pixel à filtrer par une moyenne calculée à partir de la valeur dudit pixel et des valeurs de pixels voisins dudit pixel. La **Fig. 7** représente une image correspondant à une application d'un filtre moyenneur à l'image de la Fig. 6C (*i.e.* à la deuxième image).

Dans une étape 43, le module de traitement 102 applique une analyse en composantes connexes à la troisième image afin de définir des régions dans ladite troisième image, chaque région étant constituée de pixels ayant une valeur identique, appelée par la suite *valeur représentative*. Une analyse en composante connexe appliquée à une image consiste à parcourir les pixels de ladite image, et à donner un label à chaque pixel. Deux pixels voisins qui ont la même valeur sont considérés comme appartenant à une même région et ont donc le même label. Deux pixels voisins qui n'ont pas la même valeur n'appartiennent pas à la même région et ont donc des labels différents.

Dans une étape 44, le module de traitement 102 organise les régions obtenues sous forme d'arbre hiérarchique dans lequel les régions sont organisées selon une relation parents-enfants. Dans cet arbre, une première région est parent d'une deuxième région, qui est alors enfant de la première région, lorsqu'au moins un pixel de la deuxième région est voisin d'un pixel de la première région et qu'un écart entre les valeurs représentatives des première et deuxième régions est plus faible qu'un écart entre les valeurs représentatives de la première région et de toutes autres régions ayant au moins un pixel voisin d'un pixel de la première région. Dans la deuxième image, les pixels correspondant aux zones de la pluralité de doigts les plus appuyés sur la face supérieure de la lame transparente, c'est-à-dire correspondant notamment aux crêtes des empreintes digitales sont les pixels les plus foncés. En termes de niveau de gris, un pixel foncé correspond à une valeur de niveau de gris faible (*i.e.* proche de « 0 ») alors qu'un pixel clair correspond à une valeur de niveau de gris élevée (*i.e.* proche de « 255 » pour des niveaux de gris codés sur « 8 » bits). Dans l'arbre hiérarchique, une région enfant possède une valeur représentative (c'est-à-dire, la valeur commune de chaque pixel constituant cette région) plus faible que sa région parent. L'arbre hiérarchique comprend donc des feuilles (*i.e.* des régions sans enfants) correspondant aux régions les plus foncées. L'organisation des régions sous forme d'arbre hiérarchique s'appuie par exemple sur une méthode décrite dans le document « Yongchao Xu, Tree-based shape spaces : définition and applications in image processing and computer vision, Université Paris-Est, 2013 ».

La **Fig. 13A** représente une image comprenant un ensemble de régions obtenues par analyse en composantes connexes d'une image en niveau de gris. Le niveau de gris de chaque région dans la Fig. 13A correspond à la valeur représentative de ladite région. Les régions 130 et 134 sont les régions les plus sombres et donc associées à la valeur représentative la plus faible. La région 139 qui correspond au fond de l'image de la Fig. 13A est la région la plus claire et donc associée à la valeur représentative la plus élevée.

La **Fig. 13B** correspond à une représentation sous forme d'arbre hiérarchique de l'image de la Fig. 13A. Les feuilles de l'arbre sont constituées des régions 130 et 134. La racine de l'arbre est constituée de la région 139. La feuille 130, les noeuds 131 à 133 et 138 et la racine 139 sont organisés par ordre de valeurs représentatives croissantes. La feuille 134, les noeuds 135 à 137 et 138 et la racine 139 sont organisés par ordre de valeurs représentatives croissantes. L'arbre hiérarchique obtenu comprend une branche A et une branche B.

On note que, lorsqu'une intersection entre une région enfant et une région parent est non vide, l'intersection est considérée comme faisant partie de la région enfant, mais ne fait pas partie de la région parent. Ainsi la région 130 qui est totalement incluse dans la région 131, ne fait pas partie de la région 131. Agglomérer une région enfant avec une région parent consiste à déterminer une région agglomérée correspondant à une union des régions parent et enfant.

Dans une étape 46, le module de traitement 102 parcourt l'arbre hiérarchique par ordre de valeurs représentatives croissantes et agglomère une région enfant avec sa région parent lorsqu'au moins un critère prédéterminé est respecté. Un premier critère prédéterminé est basé sur une évolution d'une aire des régions résultant de l'agglomération. Ce critère est basé sur l'hypothèse que, lorsque suite à l'agglomération d'une région enfant avec sa région parent, l'aire de la région agglomérée a très fortement augmenté par rapport à l'aire de la région enfant, alors la région agglomérée englobe plusieurs doigts.

Le module de traitement 102 calcule un pourcentage d'augmentation *p* de l'aire de la région agglomérée par rapport à l'aire de la région enfant et compare ce pourcentage d'augmentation *p* avec un pourcentage d'augmentation prédéterminé P. Une région parent n'est pas agglomérée avec une région enfant si le pourcentage d'augmentation *p* est supérieur au pourcentage d'augmentation prédéterminé P.

Le module de traitement 102 calcule un coefficient d'accroissement C :

$$C = a \times S + b \times \Delta S$$

où *a* et *b* sont deux constantes prédéterminées (par exemple *a*=1 et *b*=2), S est l'aire de la région enfant à agglomérer et $\Delta S$ est un pourcentage d'augmentation de l'aire de la région agglomérée par rapport à l'aire de la région enfant.

Une agglomération d'une région enfant avec sa région parent est autorisée lorsque le coefficient d'accroissement C est inférieur ou égal à un seuil prédéterminé *CMAX*. Si le coefficient d'accroissement C est supérieur au seuil prédéterminé CMAX, l'agglomération n'est pas autorisée et la région enfant est considérée comme une région finale. Le seuil prédéterminé *CMAX* est par exemple égal à « 150 ». Dans l'exemple de la Fig. 13A, la région enfant 130 peut être agglomérée avec sa région parent 131 puisque le coefficient d'accroissement C est inférieur au seuil prédéterminé *CMAX* pour cette agglomération. La région résultant de cette agglomération devient alors enfant de la région 132. Pour la même raison, l'agglomération avec les régions 132 puis 133 est autorisée. Par contre, le coefficient d'accroissement C étant supérieur au seuil prédéterminé *CMAX* pour l'agglomération avec la région 138, cette agglomération n'est pas autorisée. L'agglomération pour la branche A de l'arbre hiérarchique s'arrête et la région résultant des agglomérations des régions 130 à 133 devient finale. De même, la région finale pour la branche B résulte des agglomérations des régions 134 à 137.

On note que le module de traitement 102 utilise le premier et/ou le deuxième critère.

La **Fig. 8** représente une succession d'images illustrant une formation de régions dans la troisième image en utilisant l'arbre hiérarchique.

Pour plus de visibilité, dans les images de la Fig. 8 (mais aussi pour les images des Figs. 9, 10A, 11B, 12A et 12C) les valeurs représentatives des régions ont été inversées. Ainsi, les régions les plus claires dans les images de la Fig. 8 correspondent aux zones les plus foncées dans la troisième image et les régions les plus foncées correspondent aux zones les plus claires dans la troisième image. Le fond des images de la Fig. 8 apparaît donc noir.

Les images de la Fig. 8 se lisent de gauche à droite et de haut en bas. Une première région apparaît dans la première image de la succession. Cette région correspond à la zone la plus foncée de la troisième image. Deux autres régions apparaissent dans la deuxième image de la succession, puis une quatrième dans la troisième image de la succession. Ces quatre régions correspondent aux quatre doigts posés sur la face supérieure de la lame transparente 100. Chaque région correspond à la zone la plus foncée d'un doigt. Les zones les plus foncées dans la troisième image (et donc les régions les plus claires dans les images de la Fig. 8) correspondant aux parties de doigts les plus appuyées sur la face supérieure de la lame transparente 100, on se rend compte que certains doigts sont plus appuyés que d'autres sur ladite face supérieure.

Les images de la Fig. 8 montrent que le parcours de l'arbre hiérarchique et l'agglomération des régions enfants avec leur région enfant permet, au fur et à mesure des agglomérations, d'obtenir des régions correspondant aux doigts. Dans la dernière image de la succession, trois doigts sont agglomérés dans une même région située à gauche de la dernière image. Cette région est à exclure car elle ne respecte pas le critère prédéterminé et notamment le premier critère. Le module de traitement 102 considère alors que les régions de l'avant dernière image de la succession agglomérées pour former la région à exclure sont des régions finales.

On remarque que l'organisation en arbre hiérarchique permet de parcourir les branches de l'arbre hiérarchique indépendamment. Plusieurs régions peuvent ainsi grossir en parallèle et indépendamment. Une région peut continuer de grossir alors qu'une autre région est au stade de région finale.

La **Fig. 9** représente une succession d'images représentant une évolution d'une région. Les images de la Fig. 9 se lisent de gauche à droite. La Fig. 9 correspond typiquement au parcours d'une des branches de l'arbre hiérarchique. Ainsi, seule une région grossit dans les images de la Fig. 9. La région obtenue dans l'avant-dernière image de la succession est une région finale car la région obtenue dans la dernière image de la succession ne respecte pas le critère prédéterminé.

La **Fig. 10A** représente des régions formées suite au parcours de l'arbre hiérarchique. Quatre régions correspondant aux quatre doigts posés sur la face supérieure de la lame transparente 100 ont été obtenues.

La **Fig. 10B** représente des zones de la deuxième image (*i.e.* l'image résultant du filtre top-hat) correspondant aux quatre régions détectées suite au parcours de l'arbre hiérarchique. Les régions représentées dans la Fig. 10A sont exploitables car elles sont disjointes ce qui permet de distinguer facilement les quatre doigts.

Le résultat du parcours de l'arbre hiérarchique n'est cependant pas toujours aussi idéal.

La **Fig. 11A** représente une image d'une pluralité de doigts fournie par le capteur TCM 101 dans laquelle les doigts sont collés et la **Fig. 11B** représente des régions finales obtenues à partir de cette image. On se rend compte dans la Fig. 11B que, alors que quatre doigts apparaissent dans l'image de la Fig. 11A, seules trois régions apparaissent dans la Fig. 11B.

La **Fig. 12A** représente une des régions détectées dans l'image de la Fig. 11A et la **Fig. 12B** représente une empreinte correspondant à la région détectée. Comme on peut le voir dans la Fig. 12B, la région de la Fig. 12A correspond à deux empreintes. L'application du critère prédéterminé a donc permis l'agglomération de deux régions qui n'auraient pas dû l'être.

Pour traiter ce cas, le procédé de la Fig. 4 comprend une étape 46 et une étape 47 optionnelles.

Lors de l'étape 46, le module de traitement 102 applique une érosion morphologique aux régions obtenues lors de l'étape 45. L'érosion se fait par large filtre afin de morceler les régions obtenues lors de l'étape 45 s'il y a lieu.

Lors de l'étape 47, le module de traitement 102 applique au moins une dilatation morphologique aux régions obtenues lors de l'étape 46 tant que chaque région obtenue par érosion morphologique reste indépendante. En d'autres termes, lors de l'étape 47 le module de traitement 102 applique au moins une dilatation morphologique aux régions obtenues lors de l'étape 46, tant que les régions obtenues lors de l'étape 46 ne fusionnent pas.

La **Fig. 12C** représente à gauche la région de la Fig. 12A après érosion morphologique et, à droite, un résultat d'au moins une dilatation morphologique des régions obtenues par érosion morphologique. La région de la Fig. 12A a été séparée en deux régions distinctes.

Dans une étape 48, le module de traitement 102 détermine une enveloppe convexe pour chaque région obtenue lors de l'étape 45 (ou lors de l'étape 47 si cette étape a été exécutée). Pour ce faire, le module de traitement 102 utilise une méthode décrite dans *« A. M. Andrew, Another efficient algorithm for convex hulls in two dimensions, Information Processing Letters, 1973 ».*

Dans une étape 49, le module de traitement 102 génère une quatrième image en conservant les pixels de la deuxième image (*i.e.* l'image issue du filtre top-hat) situés dans chaque enveloppe convexe.

Dans une étape 50 optionnelle, le module de traitement 102 applique un traitement aux valeurs des pixels de la quatrième image compris dans chaque enveloppe convexe afin que ces pixels aient des valeurs se situant dans une gamme de valeurs prédéterminées. Le traitement appliqué lors de l'étape 50 consiste, pour chaque ensemble de pixels situés dans une enveloppe convexe, en un rehaussement d'histogramme afin de remettre une dynamique des valeurs de pixels dudit ensemble de pixels, sur une dynamique de valeurs de pixels d'empreintes digitales fournie par un capteur CCD ou CMOS. Dans une image en niveaux de gris sur « 8 » bits fournie par un capteur CCD ou CMOS, les valeurs des pixels sont réparties entre « 0 » et « 255 », les pixels correspondant aux crêtes étant les plus foncés et les pixels correspondant aux vallées étant les plus clairs. Dans un mode de réalisation, le traitement appliqué lors de l'étape 50 consiste à étendre l'histogramme des valeurs des pixels de la quatrième image compris dans chaque enveloppe convexe de manière à le répartir entre « 0 » et « 255 ». Si par exemple, les valeurs desdits pixels sont comprises entre une valeur minimale VMIN et une valeur maximale VMAX, chaque pixel ayant la valeur VMIN prend la valeur « 0 », chaque pixel ayant la valeur VMAX prend la valeur « 255 » et chaque pixel ayant une valeur VINT intermédiaire entre VMIN et VMAX prend une valeur $VINT = \frac{255\,(VINT - VMIN)}{VMAX - VMIN}$ .

Dans un autre mode de réalisation, toujours pour une image en niveaux de gris sur « 8 » bits, les pixels dont la valeur est comprise entre « 0 » et « 100 » sont mis à « 0 » et les pixels dont la valeur est comprise entre « 150 » et « 255 » sont mis à « 255 ».

Les pixels dont la valeur est comprise entre « 100 » et « 150 » sont mis à « 0 » si une majorité des pixels de leur voisinage ont une valeur comprise entre « 0 » et « 100 » et sont mis à « 255 » si une majorité des pixels de leur voisinage ont une valeur comprise entre « 150 » et « 255 ». Un voisinage d'un pixel est par exemple un carré de pixels de trois pixels de côté centré sur ledit pixel.

Dans une étape 51 optionnelle, le module de traitement 102 applique une transformée en distance (TFD) aux pixels de la quatrième image compris dans chaque enveloppe convexe obtenus après le traitement de l'étape 50. Par la suite, nous appelons ces pixels *pixels internes.* On considère ici que les pixels de l'enveloppe convexe sont des pixels internes. Le principe de la TFD est décrit dans le document « A. Rosenfeld, J. Pfaltz, « distance functions in digital pictures », Pattern Recognition, Vol. 1, 1968, P. 33-61 ». L'application de la TFD aux pixels internes permet de déterminer pour chaque pixel interne, une distance entre ledit pixel interne et l'enveloppe convexe qui contient ledit pixel interne. Le module de traitement 102 met ensuite tous les pixels situés en dehors d'une enveloppe convexe à une valeur prédéterminée $V_{pred}$. La valeur prédéterminée $V_{pred}$ est par exemple égale à « 255 » pour une image en niveaux de gris. La valeur de chaque pixel interne est ensuite modifiée en fonction de la distance $d_{TFD}$ entre ce pixel interne et l'enveloppe convexe qui le contient obtenue par la TFD. Par exemple,

- Si $d_{TFD}$ > DIST, la valeur du pixel interne reste inchangée.
- Si $0 \leq d_{TFD} \leq$ DIST, la valeur du pixel $V_{pixel}$ est modifiée de la manière suivante :

$$V_{pixel} = \frac{V_{pred} \times (DIST - d_{TFD}) + d_{TFD} \times V_{pixel}}{DIST}$$

où *DIST* est une distance maximale égale par exemple à « 10 » pixels. Le traitement appliqué lors de l'étape 51 permet d'obtenir une transition douce aux frontières des zones de la quatrième image délimitées par les enveloppes convexes. Cette transition douce permet d'atténuer un impact négatif qu'auraient des ombres portées qui auraient été conservées sur les bords des doigts.

**Revendications**

1. Procédé de traitement d'une image représentative d'au moins un doigt fournie par un capteur d'images de type transistor en couches minces d'un système de capture d'empreintes digitales (10), pour une identification ou une authentification de l'empreinte, ledit système comprenant une lame transparente (100) comprenant une face sur laquelle est posé chaque doigt et ledit capteur d'images (101) étant positionné de sorte à générer une image de chaque doigt, le procédé comprenant :

   obtenir (40) une image de chaque doigt fournie par le capteur d'images, dite première image ;
   obtenir (41) une deuxième image en supprimant chaque composante continue de la première image en appliquant un filtre passe-haut ;
   obtenir (42) une troisième image en appliquant un filtre moyenneur à la deuxième image ;
   appliquer (43) une analyse en composantes connexes à la troisième image afin de définir des régions dans ladite troisième image, chaque région comprenant des pixels ayant une valeur identique, dite valeur représentative ;

organiser (44) les régions sous forme d'arbre hiérarchique dans lequel les régions sont organisées selon une relation parents-enfants, une première région étant parent d'une deuxième région, qui est alors enfant de la première région, lorsqu'au moins un pixel de la deuxième région est voisin d'un pixel de la première région et qu'un écart entre les valeurs représentatives des première et deuxième régions est plus faible qu'un écart entre les valeurs représentatives de la première région et de toutes autres régions ayant au moins un pixel voisin d'un pixel de la première région, la région enfant ayant une valeur représentative plus faible que sa région parent;

parcourir (45) l'arbre hiérarchique par ordre de valeurs représentatives croissantes et agglomérer chaque région enfant avec sa région parent lorsqu'un coefficient d'accroissement C est inférieur à un premier seuil prédéterminé, le coefficient d'accroissement étant calculé de la manière suivante :

$$C = a \times S + b \times \Delta S$$

où *a* et *b* sont des constantes prédéterminées, S est une aire de la région enfant et $\Delta S$ est un pourcentage d'augmentation de l'aire de la région agglomérée par rapport à l'aire de la région enfant ;

déterminer (48) une enveloppe convexe pour chaque région agglomérée obtenue ;

générer (49) une quatrième image en conservant les pixels situés dans chaque enveloppe convexe dans la deuxième image.

2. Procédé selon la revendication 1, **caractérisé en ce que** le procédé comprend appliquer (50) un traitement aux valeurs des pixels de la quatrième image compris dans chaque enveloppe convexe afin que ces pixels aient des valeurs se situant dans une gamme de valeurs prédéterminées.

3. Procédé selon l'une quelconque des revendications précédentes, **caractérisé en ce que** le procédé comprend, fixer la valeur de chaque pixel de la quatrième image situé à l'extérieur d'une enveloppe convexe à une valeur prédéfinie et modifier une valeur initiale de chaque pixel de la quatrième image situé à l'intérieur d'une enveloppe convexe en une valeur finale en fonction d'une distance entre ledit pixel et ladite enveloppe convexe, de sorte que la valeur finale se rapproche de la valeur prédéfinie lorsque ladite distance diminue et se rapproche de la valeur initiale lorsque ladite distance augmente.

4. Dispositif de traitement d'une image représentative d'au moins un doigt fournie par un capteur d'images de type transistor en couches minces d'un système de capture d'empreintes digitales (10), pour une identification ou une authentification de l'empreinte, ledit système comprenant une lame transparente (100) comprenant une face sur laquelle est posé chaque doigt et ledit capteur d'images (101) étant positionné de sorte à générer une image de chaque doigt, le dispositif comprenant :

des moyens d'obtention pour obtenir (40) une image de chaque doigt fournie par le capteur d'images, dite première image ;

des moyens de filtrage passe-haut pour obtenir (41) une deuxième image en supprimant chaque composante continue de la première image;

des moyens de filtrage pour obtenir (42) une troisième image en appliquant un filtre moyenneur à la deuxième image ;

des moyens de traitement pour appliquer (43) une analyse en composantes connexes à la troisième image afin de définir des régions dans ladite troisième image, chaque région comprenant des pixels ayant une valeur identique, dite valeur représentative ;

des moyens de traitement pour organiser (44) les régions sous forme d'arbre hiérarchique dans lequel les régions sont organisées selon une relation parents-enfants, une première région étant parent d'une deuxième région, qui est alors enfant de la première région, lorsqu'au moins un pixel de la deuxième région est voisin d'un pixel de la première région et qu'un écart entre les valeurs représentatives des première et deuxième régions est plus faible qu'un écart entre les valeurs représentatives de la première région et de toutes autres régions ayant au moins un pixel voisin d'un pixel de la première région, la région enfant ayant une valeur représentative plus faible que sa région parent;

des moyens de traitement pour parcourir (45) l'arbre hiérarchique par ordre de valeurs représentatives croissantes et agglomérer chaque région enfant avec sa région parent lorsqu'un coefficient d'accroissement C est inférieur à un premier seuil prédéterminé, le coefficient d'accroissement étant calculé de la manière suivante :

$$C = a \times S + b \times \Delta S$$

où *a* et *b* sont des constantes prédéterminées, S est une aire de la région enfant et $\Delta S$ est un pourcentage d'augmentation de l'aire de la région agglomérée par rapport à l'aire de la région enfant ;

des moyens de traitement pour déterminer (48) une enveloppe convexe pour chaque région agglomérée obtenue;

des moyens de traitement pour générer (49) une quatrième image en conservant les pixels situés dans chaque enveloppe convexe dans la deuxième image.

5. Programme d'ordinateur, **caractérisé en ce qu'**il comprend des instructions pour mettre en oeuvre, par un dispositif (102), le procédé selon l'une quelconque des revendications 1 à 3, lorsque ledit programme est exécuté par un processeur (1021) dudit dispositif.

6. Moyens de stockage, **caractérisés en ce qu'**ils stockent un programme d'ordinateur comprenant des instructions pour mettre en oeuvre, par un dispositif (102), le procédé selon l'une quelconque des revendications 1 à 3, lorsque ledit programme est exécuté par un processeur (1021) dudit dispositif.

## Patentansprüche

1. Verfahren zum Verarbeiten eines Bildes, das wenigstens einen Finger repräsentiert und von einem Bildsensor des Typs Dünnschichttransistor eines Systems (10) für die Aufnahme von Fingerabdrücken geliefert wird, um den Abdruck zu identifizieren oder zu authentifizieren, wobei das System ein transparentes Plättchen (100) umfasst, das eine Fläche aufweist, auf der jeder Finger abgelegt wird, und wobei der Bildsensor (101) so positioniert wird, dass er ein Bild jedes Fingers erzeugt, wobei das Verfahren Folgendes umfasst:

Erhalten (40) eines Bildes jedes Fingers, das von dem Bildsensor geliefert wird und erstes Bild genannt wird;
Erhalten (41) eines zweiten Bildes durch Unterdrücken jeder kontinuierlichen Komponente des ersten Bildes unter Anwendung eines Hochpassfilters;
Erhalten (42) eines dritten Bildes unter Anwendung eines Mittelungsfilters auf das zweite Bild;
Anwenden (43) einer Analyse verbundener Komponenten auf das dritte Bild, um in dem dritten Bild Bereiche zu definieren, wobei jeder Bereich Pixel enthält, die den gleichen Wert haben, der repräsentativer Wert genannt wird;
Organisieren (44) der Bereiche in Form eines hierarchischen Baums, in dem die Bereiche entsprechend ihrer Eltern-Kind-Beziehung organisiert sind, wobei ein erster Bereich Eltern eines zweiten Bereichs darstellt, der dann das Kind des ersten Bereichs ist, wenn wenigstens ein Pixel des zweiten Bereichs Nachbar eines Pixels des ersten Bereichs ist und wenn ein Abstand zwischen den repräsentativen Werten des ersten und des zweiten Bereichs kleiner ist als ein Abstand zwischen den repräsentativen Werten des ersten Bereichs und aller anderen Bereiche, die wenigstens ein zu einem Pixel des ersten Bereichs benachbartes Pixel besitzen, wobei der Kind-Bereich einen repräsentativen Wert hat, der kleiner ist als jener seines Eltern-Bereichs;
Durchlaufen (45) des hierarchischen Baums in der Reihenfolge wachsender repräsentativer Werte und Zusammenfügen jedes Kind-Bereichs mit seinem Eltern-Bereich, wenn ein Wachstumskoeffizient C kleiner als ein vorgegebener erster Schwellenwert ist, wobei der Wachstumskoeffizient auf die folgende Weise berechnet wird:

$$C = a \times S + b \times \Delta S,$$

wobei a und *b* vorgegebene Konstanten sind, S ein Flächeninhalt des Kind-Bereichs ist und $\Delta S$ ein Prozentsatz der Zunahme des Flächeninhalts des zusammengefügten Bereichs in Bezug auf den Flächeninhalt des Kind-Bereichs ist;
Bestimmen (48) einer konvexen Hülle für jeden erhaltenen zusammengefügten Bereich;
Erzeugen (49) eines vierten Bildes unter Beibehaltung der Pixel, die sich in jeder konvexen Hülle des zweiten Bildes befinden.

2. Verfahren nach Anspruch 1, wobei das Verfahren das Anwenden (50) einer Verarbeitung auf die Werte der Pixel des vierten Bildes, die in der konvexen Hülle enthalten sind, umfasst, damit die Pixel Werte haben, die in einem Bereich vorgegebener Werte liegen.

**3.** Verfahren nach einem der vorhergehenden Ansprüche, **dadurch gekennzeichnet, dass** das Verfahren umfasst, den Wert jedes Pixels des vierten Bildes, das sich außerhalb einer konvexen Hülle befindet, auf einen im Voraus definierten Wert festzulegen und einen anfänglichen Wert jedes Pixels des vierten Bildes, das sich innerhalb einer konvexen Hülle befindet, als Funktion eines Abstands zwischen dem Pixel und der konvexen Hülle in einen letzten Wert zu modifizieren, derart, dass der letzte Wert sich dem im Voraus definierten Wert annähert, wenn der Abstand kleiner wird, und sich dem anfänglichen Wert annähert, wenn der Abstand größer wird.

**4.** Vorrichtung zum Verarbeiten eines Bildes, das wenigstens einen Finger repräsentiert und das von einem Bildsensor des Typs Dünnschichttransistor eines Systems (10) für die Aufnahme von Fingerabdrücken geliefert wird, um den Abdruck zu identifizieren oder zu authentifizieren, wobei das System ein transparentes Plättchen (100) umfasst, das eine Fläche aufweist, auf die jeder Finger gelegt wird, und der Bildsensor (101) in der Weise positioniert ist, dass er ein Bild jedes Fingers erzeugt, wobei die Vorrichtung Folgendes umfasst:

Erhaltemittel (40) zum Erhalten eines Bildes jedes Fingers, das von dem Bildsensor geliefert wird und erstes Bild genannt wird;
Hochpassfilterungsmittel (41) zum Erhalten eines zweiten Bildes durch Unterdrücken jeder kontinuierlichen Komponente des ersten Bildes;
Filterungsmittel (42) zum Erhalten eines dritten Bildes durch Anwenden eines Mittelungsfilters auf das zweite Bild;
Verarbeitungsmittel (43) zum Anwenden einer Analyse verbundener Komponenten auf das dritte Bild, um in dem dritten Bild Bereiche zu definieren, wobei jeder Bereich Pixel enthält, die den gleichen Wert haben, der repräsentativer Wert genannt wird;
Verarbeitungsmittel (44) zum Organisieren der Bereiche in Form eines hierarchischen Baums, in dem die Bereiche gemäß einer Eltern-Kind-Beziehung organisiert sind, wobei ein erster Bereich Eltern eines zweiten Bereichs repräsentiert, der dann das Kind des ersten Bereichs ist, wenn wenigstens ein Pixel des zweiten Bereichs Nachbar eines Pixels des ersten Bereichs ist und ein Abstand zwischen den repräsentativen Werten des ersten und des zweiten Bereichs kleiner ist als ein Abstand zwischen den repräsentativen Werten des ersten Bereichs und aller anderen Bereiche, die wenigstens ein zu einem Pixel des ersten Bereichs benachbartes Pixel besitzen, wobei der Kind-Bereich einen repräsentativen Wert besitzt, der kleiner ist als jener seines Eltern-Bereichs;
Verarbeitungsmittel (45) zum Durchlaufen des hierarchischen Baums in der Reihenfolge zunehmender repräsentativer Werte und zum Zusammenfügen jedes Kind-Bereichs mit seinem Eltern-Bereich, wenn ein Wachstumskoeffizient C kleiner als ein vorgegebener erster Schwellenwert ist, wobei der Wachstumskoeffizient auf die folgende Weise berechnet wird:

$$C = a \times S + b \times \Delta S,$$

wobei a und *b* vorgegebene Konstanten sind, S ein Flächeninhalt des Kind-Bereichs ist und $\Delta S$ ein Prozentsatz der Zunahme des Flächeninhalts des zusammengefügten Bereichs in Bezug auf den Flächeninhalt des Kind-Bereichs ist;
Verarbeitungsmittel (48) zum Bestimmen einer konvexen Hülle für jeden erhaltenen zusammengefügten Bereich;
Verarbeitungsmittel (49) zum Erzeugen eines vierten Bildes unter Beibehaltung der Pixel, die sich in jeder konvexen Hülle des zweiten Bildes befinden.

**5.** Computerprogramm, **dadurch gekennzeichnet, dass** es Anweisungen enthält, um durch eine Vorrichtung (102) das Verfahren nach einem der Ansprüche 1 bis 3 auszuführen, wenn das Programm durch einen Prozessor (1021) der Vorrichtung ausgeführt wird.

**6.** Speichermittel, **dadurch gekennzeichnet, dass** sie ein Computerprogramm speichern, das Anweisungen enthält, um durch eine Vorrichtung (102) das Verfahren nach einem der Ansprüche 1 bis 3 auszuführen, wenn das Programm durch einen Prozessor (1021) der Vorrichtung ausgeführt wird.

**Claims**

**1.** Method for processing an image representative of at least one finger, said image being delivered by a thin-film-transistor image sensor of a fingerprint-capturing system (10), with a view to identification or authentication of the print, said system comprising a transparent plate (100) comprising a face on which is placed each finger and said image sensor (101) being positioned so as to generate an image of each finger, the method comprising:

obtaining (40) an image of each finger, said image being delivered by the image sensor, said image being referred to as the first image;

obtaining (41) a second image by removing each and every continuous component from the first image by applying a high-pass filter;

obtaining (42) a third image by applying an averaging filter to the second image;

applying (43) connected-component analysis to the third image in order to define regions in said third image, each region comprising pixels having an identical value, referred to as the representative value;

organizing (44) the regions into a hierarchical tree in which the regions are organized according to a parent-child relationship, a first region being a parent of a second region, which is then a child of the first region, when at least one pixel of the second region neighbours a pixel of the first region and when a deviation between the representative values of the first and second regions is smaller than a deviation between the representative values of the first region and of all other regions having at least one pixel neighbouring a pixel of the first region, the child region having a representative value lower than its parent region;

traversing (45) the hierarchical tree in increasing order of representative values and clustering each child region with its parent region when a growth coefficient C is lower than a first predetermined threshold, the growth coefficient being computed in the following way:

$$C = a \times S + b \times \Delta S$$

where **a** and **b** are predetermined constants, $S$ is an area of the child region and $\Delta S$ is a percentage increase in the area of the clustered region with respect to the area of the child region;

determining (48) a convex hull for each obtained clustered region;

generating (49) a fourth image by preserving pixels located in each convex hull in the second image.

2. Method according to Claim 1, **characterized in that** the method comprises applying (50) processing to the values of the pixels of the fourth image comprised in each convex hull in order to make it so that these pixels have values located in a range of predetermined values.

3. Method according to either one of the preceding claims, **characterized in that** the method comprises setting the value of each pixel of the fourth image located outside a convex hull to a predefined value and modifying an initial value of each pixel of the fourth image located inside a convex hull to a final value depending on a distance between said pixel and said convex hull, in such a way that the final value approaches the predefined value as said distance decreases and approaches the initial value as said distance increases.

4. Device for processing an image representative of at least one finger, said image being delivered by a thin-film-transistor image sensor of a fingerprint-capturing system (10), with a view to identification or authentication of the print, said system comprising a transparent plate (100) comprising a face on which is placed each finger and said image sensor (101) being positioned so as to generate an image of each finger, the device comprising:

obtaining means for obtaining (40) an image of each finger, said image being delivered by the image sensor, said image being referred to as the first image;

high-pass filtering means for obtaining (41) a second image by removing each and every continuous component from the first image;

filtering means for obtaining (42) a third image by applying an averaging filter to the second image;

processing means for applying (43) connected-component analysis to the third image in order to define regions in said third image, each region comprising pixels having an identical value, referred to as the representative value;

processing means for organizing (44) the regions into a hierarchical tree in which the regions are organized according to a parent-child relationship, a first region being a parent of a second region, which is then a child of the first region, when at least one pixel of the second region neighbours a pixel of the first region and when a deviation between the representative values of the first and second regions is smaller than a deviation between the representative values of the first region and of all other regions having at least one pixel neighbouring a pixel of the first region, the child region having a representative value lower than its parent region;

processing means for traversing (45) the hierarchical tree in increasing order of representative values and clustering each child region with its parent region when a growth coefficient C is lower than a first predetermined threshold, the growth coefficient being computed in the following way:

$$C = a \times S + b \times \Delta S$$

where **a** and **b** are predetermined constants, $S$ is an area of the child region and $\Delta S$ is a percentage increase in the area of the clustered region with respect to the area of the child region;
processing means for determining (48) a convex hull for each obtained clustered region;
processing means for generating (49) a fourth image by preserving pixels located in each convex hull in the second image.

5. Computer program, **characterized in that** it comprises instructions for implementing, by means of a device (102), the method according to any one of Claims 1 to 3, when said program is executed by a processor (1021) of said device.

6. Storage means, **characterized in that** they store a computer program comprising instructions for implementing, by means of a device (102), the method according to any one of Claims 1 to 3, when said program is executed by a processor (1021) of said device.

Fig. 1

Fig. 2

```
┌─────────────────────────────────────────────┐
│                                               │
│  ┌──────┐      ┌──────┐      ┌──────┐         │
│  │ 1021 │      │ 1022 │      │ 1023 │         │ ⌐ 102
│  │ CPU  │      │ RAM  │      │ ROM  │         │
│  └──┬───┘      └──┬───┘      └──┬───┘         │
│     │             │             │             │
│  ───┴─────────────┼─────────────┴─────────    │
│   ⌐                │                           │
│  1020          ┌───┴──┐      ┌──────┐         │
│                │ HDD  │      │ COM  │         │
│                │ 1024 │      │ 1025 │         │
│                └──────┘      └──────┘         │
└─────────────────────────────────────────────┘
```

Fig. 3

40 — Obtention image

↓

41 — Suppression composante continue

↓

42 — Application filtre

↓

43 — Analyse en composantes connexes

↓

44 — Organiser région(s) sous forme d'arbre hiérarchique

↓

45 — Agglomérer régions

↓

46 — Eroder régions

↓

47 — Dilater régions érodées

↓

48 — Détermination de l'enveloppe convexe de chaque région dilatée

↓

49 — Génération image

↓

50 — Rehaussement d'histogramme

↓

51 — TFD

Fig. 4

Fig. 5A

Fig. 5B

Fig. 6A

Fig. 6B

Fig. 6C

Fig. 7

Fig. 8

Fig. 9

Fig. 10A

Fig. 10B

Fig. 11A

Fig. 11B

Fig. 12A

Fig. 12B

Fig. 12C

Fig. 13A

Fig. 13B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3214601 A

**Littérature non-brevet citée dans la description**

- **P.T. JACKWAY.** improved morphological top-hat. *Electronics Letters,* 06 Juillet 2000, vol. 36 (14
- **YONGCHAO XU.** Tree-based shape spaces : définition and applications in image processing and computer vision. Université Paris-Est, 2013
- **A. M. ANDREW.** Another efficient algorithm for convex hulls in two dimensions. *Information Processing Letters,* 1973
- **A. ROSENFELD ; J. PFALTZ.** distance functions in digital pictures. *Pattern Recognition,* 1968, vol. 1, 33-61